# EUROPÄISCHE PATENTSCHRIFT

(11) **EP 2 909 037 B1**
(45) Veröffentlichungstag und Bekanntmachung des Hinweises auf die Patenterteilung: **11.01.2017**
(21) Anmeldenummer: 13794853.5
(22) Anmeldetag: 14.11.2013
(51) Int. Cl.: B41J 15/04, B41J 3/44, B41J 29/02, G01G 19/40

(54) **ETIKETTEN- UND/ODER BON-DRUCKER**
LABEL AND/OR RECEIPT PRINTER
IMPRIMANTE D'ÉTIQUETTES ET/OU DE TICKETS DE CAISSE

(30) Priorität: 30.11.2012 DE 102012221961
(43) Veröffentlichungstag der Anmeldung: 26.08.2015
(73) Patentinhaber: Bizerba SE & Co. KG, 72336 Balingen (DE)
(72) Erfinder: BLOCHER, Harald, 72355 Schömberg (DE)
(74) Vertreter: Manitz, Finsterwald & Partner GbR
(86) Internationale Anmeldenummer: PCT/EP2013/073861
(87) Internationale Veröffentlichungsnummer: WO 2014/082866

(56) Entgegenhaltungen:
- JP-A- H0 611 382
- US-A- 5 030 968
- US-A1- 2005 271 449
- US-A1- 2007 009 305
- US-A1- 2011 315 076

## Beschreibung

Die vorliegende Erfindung betrifft einen Drucker, insbesondere Thermodrucker, insbesondere für Ladenwaagen, zum Bedrucken von Druckmedien in Form von Etiketten- und/ oder Bonrollen, mit einem Druckkopf und einer zwischen einer Geschlossen-Stellung und einer Offen-Stellung klappbaren oberseitigen Abdeckung, die in der Offen-Stellung einen Zugriff auf einen Aufnahmeraum für eine Etiketten- oder Bonrolle freigibt. Ein Drucker mit den Merkmalen des Oberbegriffs des Anspruchs 1 ist aus der US 2011/0315076 A1 bekannt.

Ein derartiger Drucker, der aufgrund seiner klappbaren oberseitigen Abdeckung auch als Clamshell-Drucker bezeichnet wird, ist beispielsweise aus dem Dokument US 6,088,049 bekannt. Die Verwendung dieses Druckers ist jedoch nicht sehr flexibel.

Der Erfindung liegt die Aufgabe zugrunde, einen Drucker anzugeben, der mehrere verschiedene Druckmedien bedrucken kann und dabei komfortabel und fehlersicher zu bedienen ist.

Diese Aufgabe wird durch einen Drucker der eingangs genannten Art gelöst, und insbesondere durch eine von einem Antrieb des Druckers antreibbare Antriebsrolle zum Transport des jeweiligen Druckmediums und eine zwischen einer Geschlossen-Stellung und einer Offen-Stellung klappbare frontseitige Abdeckung, die in der Offen-Stellung einen Zugriff auf einen weiteren Aufnahmeraum für eine Bonrolle freigibt, wobei die An-triebsrolle an der frontseitigen Abdeckung vorgesehen ist.

Erfindungsgemäß sind zwei Abdeckungen vorgesehen, über die zwei voneinander getrennte Aufnahmeräume für Druckmedien zugänglich sind. Beispielsweise kann in den der oberseitigen Abdeckung zugeordneten Aufnahmeraum - der nachfolgend auch als erster Aufnahmeraum bezeichnet wird - eine Etikettenrolle, insbesondere eine Trägerband-Etikettenrolle oder eine Linerless-Etikettenrolle, oder eine Bonrolle eingesetzt werden, und in den der front- bzw. vorderseitigen Abdeckung zugeordneten, insbesondere in Spenderichtung der Etiketten bzw. Bons gesehen hinter dem ersten Aufnahmeraum angeordneten weiteren Aufnahmeraum - der nachfolgend auch als zweiter Aufnahmeraum bezeichnet wird - eine weitere Bonrolle, die gegenüber der in den ersten Aufnahmeraum einsetzbaren Etikettenrolle z.B. eine geringere Breite aufweist. Insbesondere ist der zweite Aufnahmeraum zusätzlich dazu ausgebildet, eine Trägerbandrolle zum Aufwickeln eines Trägerbands einer in den ersten Aufnahmeraum eingesetzten Trägerband-Etikettenrolle aufzunehmen.

Da die Antriebsrolle an der frontseitigen Abdeckung vorgesehen ist, ist die Antriebsrolle zusammen mit der frontseitigen Abdeckung aufklappbar. Beim Zuklappen der frontseitigen Abdeckung kann ein entsprechend weit abgewickelter Rollenanfang des in den zweiten Aufnahmeraum eingesetzten Druckmediums dann durch die Antriebsrolle geklemmt und hierdurch auf einfache Weise sichergestellt werden, dass das in den zweiten Aufnahmeraum eingesetzte Druckmedium von der Antriebsrolle reibschlüssig gefasst wird. Ein umständliches Einfädeln des Rollenanfangs in eine Zuführöffnung für die Antriebsrolle entfällt.

Nach einer Ausgestaltung der Erfindung umfasst die frontseitige Abdeckung einen äußeren Rahmen mit der Antriebsrolle und eine relativ zu dem äußeren Rahmen zwischen einer Geschlossen-Stellung und einer Offen-Stellung klappbare Innenklappe, die in der Offen-Stellung den Zugriff auf den weiteren Aufnahmeraum für eine Trägerbandrolle, wie sie vorstehend beschrieben ist, freigibt. Zum Einsetzen einer Trägerbandrolle in den zweiten Aufnahmeraum ist es daher nicht erforderlich, die gesamte frontseitige Abdeckung aufzuklappen, sondern es ist hierzu vielmehr ausreichend, lediglich die Innenklappe zu öffnen. Die Innenklappe kann beispielsweise über eine wie nachstehend beschriebene Verriegelung und wie nachstehend beschriebene Betätigungsmittel betätigt werden.

Vorzugsweise ist eine Medienaufnahme für eine Bonrolle vorgesehen, die bei geöffneter frontseitiger Abdeckung in den weiteren Aufnahmeraum einsetzbar ist. Bevorzugt ist die Medienaufnahme nicht durch die Innenklappe in den weiteren Aufnahmeraum einsetzbar. Bei der Medienaufnahme für die Bonrolle kann es sich insbesondere um eine Aufnahmeschale handeln. Die Bonrolle kann dann einfach in die Aufnahmeschale gelegt werden.

Nach einer weiteren Ausgestaltung der Erfindung sind Blockiermittel vorgesehen, die das Öffnen der Innenklappe bei eingesetzter Medienaufnahme blockieren. Hierdurch kann verhindert werden, dass ein Bediener versehentlich versucht, eine Trägerbandrolle in den weiteren Aufnahmeraum einzusetzen, obwohl sich darin bereits eine Bonrolle bzw. eine Medienaufnahme für eine Bonrolle befindet.

Es kann eine Verriegelung vorgesehen sein, die in eine das Öffnen der Innenklappe verriegelnde Stellung vorgespannt ist und die mittels Betätigungsmitteln in eine das Öffnen der Innenklappe erlaubende, entriegelnde Stellung überführbar ist, wobei bei eingesetzter Medienaufnahme die Betätigung der Verriegelung blockiert ist. Die Blockiermittel wirken in diesem Fall direkt auf die das Öffnen und das Schließen der Innenklappe bewirkende Verriegelung ein.

Beispielsweise kann die Verriegelung hierzu zwei jeweils in lateraler Richtung bewegliche, lateral voneinander beabstandete sowie einander entgegengesetzt und jeweils nach lateral vorgespannte Schieber aufweisen, die in der verriegelnden Stellung mit äußeren Enden in laterale Seiten des äußeren Rahmens eingreifen, wobei die Medienaufnahme für jeden der beiden Schieber einen Blockadeabschnitt aufweist, wobei die Blockadeabschnitte bei in den weiteren Aufnahmeraum eingesetzter Medienaufnahme in eine jeweilige Bewegungsbahn des jeweiligen Schiebers eingreifen und jeweils als die Überführung des jeweiligen Schiebers in die entriegelnde Stellung blockierender Anschlag für ein inneres Ende des jeweiligen Schiebers wirken.

Bevorzugt steht die in den weiteren Aufnahmeraum eingesetzte Trägerbandrolle in antriebswirksamer Verbindung mit dem vorgenannten Antrieb des Druckers zum Antreiben der Antriebsrolle, wobei insbesondere der Trägerbandrolle eine Rutschkupplung vorgeschaltet ist. Hierdurch kann gewährleistet werden, dass ein Trägerband einer in den ersten Aufnahmeraum eingesetzten Trägerband-Etikettenrolle unter Zugspannung auf die Trägerbandrolle aufgewickelt werden kann.

Für Trägerband-Etikettenrollen und Linerless-Etikettenrollen kann ein Rollenhalter vorgesehen sein, der bei geöffneter oberseitiger Abdeckung in den Aufnahmeraum einsetzbar ist. Alternativ oder zusätzlich kann in dem Aufnahmeraum eine in eine Aufnahmeposition klappbare Klappauflage für eine Bonrolle vorgesehen sein. Dadurch kann ein störungsfreies Abwickeln der Etikettenrollen bzw. der Bonrollen gewährleistet werden.

Insbesondere werden unter der Bezeichnung "Linerless-Etikettenrollen" selbstklebende trägerbandlose Etikettenrollen verstanden. Derartige Etikettenrollen können nach anderem Sprachgebrauch jedoch auch als "Linerless-Bonrollen" bezeichnet werden. Im Unterschied hierzu ist unter einer "Bonrolle" dann eine herkömmliche, ohne Klebeschicht hergestellte Bonrolle zu verstehen.

Es ist bevorzugt, wenn die Antriebsrolle als Druckwalze für den Druckkopf ausgebildet ist, d.h. der Druckkopf unmittelbar über der Antriebsrolle angeordnet ist und das Druckmedium zwischen dem Druckkopf und der Druckwalze hindurchgeführt wird. Wenn der Druckkopf an der oberseitigen Abdeckung vorgesehen ist, ist der Druckkopf mit der oberseitigen Abdeckung aufklappbar. Beim Zuklappen der oberseitigen Abdeckung kann ein entsprechend weit abgewickelter Rollenanfang des in den ersten Aufnahmeraum eingesetzten Druckmediums dann zwischen dem Druckkopf und der Antriebsrolle geklemmt und hierdurch auf einfache Weise sichergestellt werden, dass das in den ersten Aufnahmeraum eingesetzte Druckmedium von der Antriebsrolle reibschlüssig gefasst wird. Bei dem Druckkopf handelt es sich insbesondere um einen Thermodruckkopf.

Der Drucker kann wenigstens drei, insbesondere vier voneinander verschiedene Papierführungen bzw. Transportwege für Druckmedien zur Verfügung stellen. Eine Papierführung umfasst eine auf einem Rollenhalter angeordnete Trägerband-Etikettenrolle, die in den ersten Aufnahmeraum eingesetzt ist und die über die Antriebsrolle abgewickelt wird, wobei für das Trägerband eine zugeordnete Trägerbandrolle in den zweiten Aufnahmeraum eingesetzt ist. Eine andere Papierführung umfasst eine auf einem Rollenhalter angeordnete Linerless-Etikettenrolle, die in den ersten Aufnahmeraum eingesetzt ist und die über die Antriebsrolle abgewickelt wird, der mangels Trägerband allerdings keine Trägerbandrolle zugeordnet ist. Eine andere Papierführung umfasst eine auf einer in dem ersten Aufnahmeraum vorgesehenen Klappauflage angeordnete Bonrolle, die über die Antriebsrolle abgewickelt wird. Eine weitere Papierführung umfasst eine in einer in dem zweiten Aufnahmeraum vorgesehenen Medienaufnahme angeordnete Bonrolle, die über die Antriebsrolle abgewickelt wird. Den Bonrollen ist ebenfalls keine Trägerbandrolle zugeordnet.

Insbesondere ist den voneinander verschiedenen Papierführungen dieselbe Antriebsrolle, derselbe Druckkopf und/oder dieselbe Spendeöffnung zugeordnet, d.h. der Drucker weist lediglich eine einzige, für alle Papierführungen gemeinsame Antriebsrolle, lediglich einen einzigen, für alle Papierführungen gemeinsamen Druckkopf und/oder lediglich eine einzige, für alle Papierführungen gemeinsame Spendeöffnung auf, durch die die verschiedenen Druckmedien - unabhängig von der jeweiligen Papierführung - stromabwärts des Druckkopfs gespendet werden.

Für Trägerband-Etikettenrollen und Linerless-Etikettenrollen kann ein gemeinsamer Rollenhalter vorgesehen sein. Für Bonrollen können zwei voneinander verschiedene Medienaufnahmen vorgesehen sein, insbesondere für Bonrollen unterschiedlicher Breite.

Die Erfindung betrifft weiterhin eine Ladenwaage mit einem Drucker, wie er vorstehend beschrieben ist.

Vorteilhafte Ausgestaltungen der Erfindung sind in den Unteransprüchen, der Beschreibung und der Zeichnung beschrieben.

Ein nicht beschränkendes Ausführungsbeispiel der Erfindung ist in der Zeichnung dargestellt und wird nachfolgend beschrieben.

Es zeigen,
- Fig. 1: eine perspektivische Frontalansicht eines Etiketten- und Bondruckers mit geöffneter Innenklappe gemäß einer Ausführungsform der Erfindung,
- Fig. 2: einen Längsschnitt durch den Drucker gemäß Fig. 1 mit einer in einen ersten Aufnahmeraum eingesetzten Trägerband-Etikettenrolle, wobei sich eine oberseitige Abdeckung und eine frontseitige Abdeckung jeweils in einer Geschlossen-Stellung befinden,
- Fig. 3: einen Längsschnitt durch den Drucker gemäß Fig. 1 mit einer in einen zweiten Aufnahmeraum eingesetzten Bonrolle, wobei sich die oberseitige Abdeckung und die frontseitige Abdeckung jeweils in einer Geschlossen-Stellung befinden,
- Fig. 4: einen Längsschnitt durch den Drucker gemäß Fig. 1 mit geöffneter oberseitiger Abdeckung und geöffneter frontseitiger Abdeckung,
- Fig. 5: eine perspektivische Rückansicht der frontseitigen Abdeckung, und
- Fig. 6: eine perspektivische Rückansicht der frontseitigen Abdeckung mit eingesetzter Bonrollen-Aufnahmeschale.

Eine Ladenwaage wird beispielsweise in Supermärkten dazu verwendet, das Gewicht von an einer Lebensmitteltheke verkauften Nahrungsmitteln zu wiegen. Üblicherweise umfasst eine derartige Ladenwaage auch einen Drucker, insbesondere einen Thermodrucker, um einen Bon oder ein Etikett u.a. mit dem gewogenen Gewicht, dem Namen des Nahrungsmittels und dem berechneten Preis zu bedrucken.

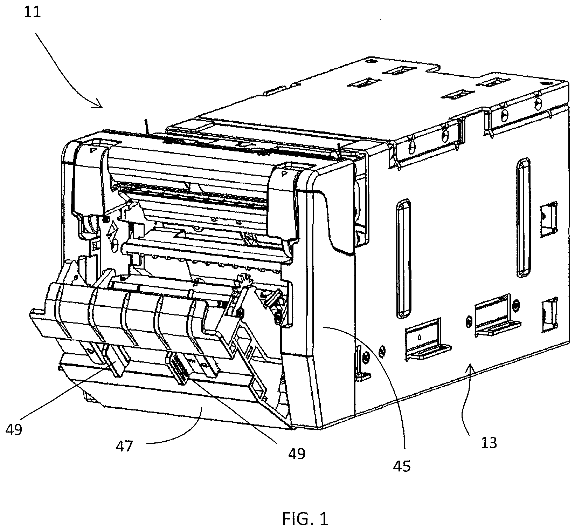

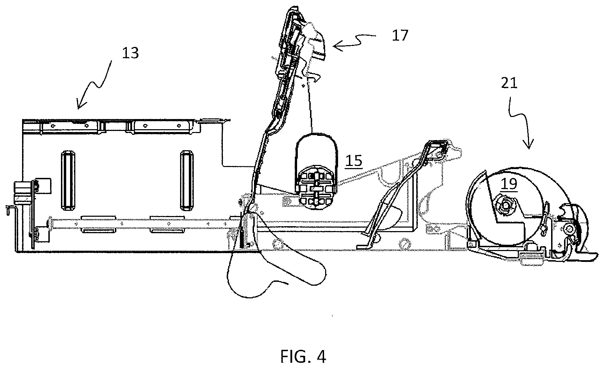

Wie in den Fig. 1 und 4 zu erkennen ist, kann der erfindungsgemäße Etiketten- und Bondrucker 11 ausziehbar in einem Chassis 13 angeordnet werden, das in einem entsprechend ausgebildeten Bauraum einer nicht dargestellte Ladenwaage angeordnet ist, um den Drucker 11 in die Ladenwaage zu integrieren. Durch das Ausziehen ist es möglich, den Drucker 11 mit einer Etiketten- oder Bonrolle zu beladen. Der derart beladene Drucker 11 kann dann wieder in das Chassis 13 zurückgeschoben werden, um den bestimmungsgemäßen Betrieb der Ladenwaage zu starten bzw. fortzusetzen.

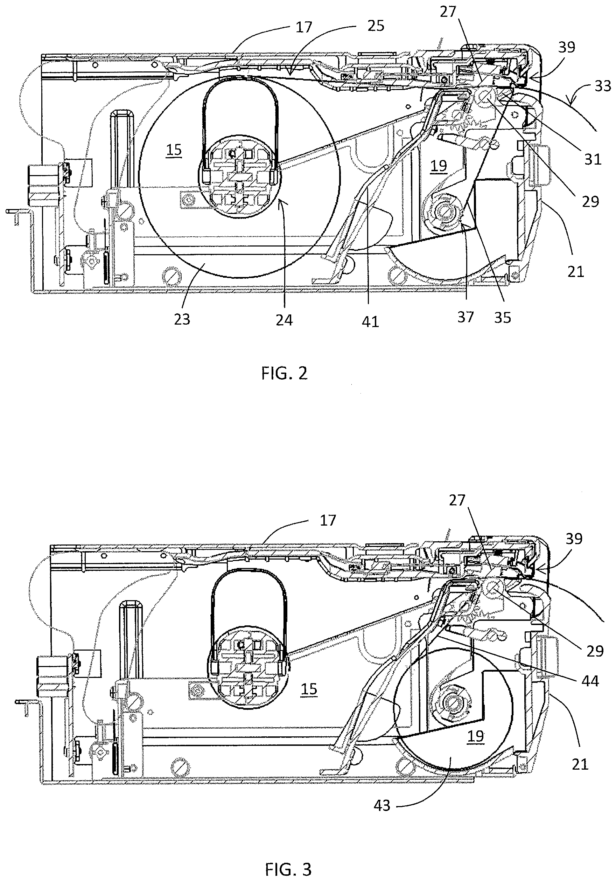

Der Drucker 11 weist zwei Aufnahmeräume für Etiketten- bzw. Bonrollen auf (Fig. 2 bis 4). Der erste Aufnahmeraum 15 ist über eine nach hinten aufklappbare oberseitige Abdeckung 17 zugänglich, der zweite Aufnahmeraum 19 über eine nach unten aufklappbare frontseitige Abdeckung 21. In den ersten Aufnahmeraum 15 kann bei Offen-Stellung der oberseitigen Abdeckung 17 eine Trägerband-Etikettenrolle, eine Linerless-Etikettenrolle oder eine Bonrolle eingesetzt werden. In den zweiten Aufnahmeraum 19 kann bei Offen-Stellung der stirnseitigen Abdeckung 21 eine Bonrolle oder bei Offen-Stellung einer im Folgenden noch näher zu erläuternden Innenklappe der stirnseitigen Abdeckung 21 eine Trägerbandrolle eingesetzt werden.

In Fig. 2 wird der Drucker 11 mit einer Trägerband-Etikettenrolle 23 betrieben. Hierzu ist eine Trägerband-Etikettenrolle 23 über einen Rollenhalter 24 in den ersten Aufnahmeraum 15 eingesetzt. Die Papierführung bzw. der Transportweg erfolgt dabei derart, dass die Mediumbahn 25, d.h. das Trägerband mit den darauf befindlichen Etiketten, zunächst zwischen einem Thermodruckkopf 27 und einer als Druckwalze ausgebildeten Antriebsrolle 29 hindurchläuft, um die Etiketten zu bedrucken. Nach der Antriebsrolle 29 wird die Mediumbahn 25 an einer Abziehkante 31 nach unten umgelenkt, wodurch eine Trennung der Etiketten 33 von dem Trägerband 35 bewirkt wird. Die Etiketten 33 werden dann durch eine Austritts- bzw. Spendeöffnung in der frontseitigen Abdeckung 21 gespendet, und das Trägerband 35 wird auf eine in den zweiten Aufnahmeraum 19 eingesetzten Trägerbandrolle 37 aufgewickelt. Die Antriebsrolle 29 und die Trägerbandrolle 37 werden über einen nicht weiter beschriebenen Kettenradantrieb von einem elektrischen Motor angetrieben, wobei die beiden Rotationsgeschwindigkeiten derart aufeinander abgestimmt sind, dass das Trägerband 35 unter Zugspannung auf die Trägerbandrolle 37 aufwickelbar ist. Hierzu ist der Trägerbandrolle 37 eine Rutschkupplung vorgeschaltet.

Anstelle der Trägerband-Etikettenrolle 23 kann aber auch eine Linerless-Etikettenrolle in den ersten Aufnahmeraum 15 eingesetzt werden. Da eine Linerless-Etikettenrolle kein Trägerband besitzt, ist auch keine Trägerbandrolle erforderlich. Nach dem Drucken können einzelne Etiketten per Hand mittels einer Abrisskante 39 von der Linerless-Etikettenbahn abgerissen werden. Gemäß einer weiteren Variante kann auch eine Bonrolle in den ersten Aufnahmeraum 15 eingesetzt werden. Hierzu wird eine in dem ersten Aufnahmeraum 15 vorhandene Klappauflage 41 - in den Fig. 2 bis 4 gegen den Uhrzeigersinn - nach unten in die Waagrechte geklappt, so dass darin die Bonrolle aufgenommen werden kann. Nach dem Drucken werden die Bons wieder mittels der Abrisskante 39 vereinzelt.

In Fig. 3 wird der Drucker 11 mit einer Bonrolle 43 betrieben, die in den zweiten Aufnahmeraum 19 eingesetzt ist. Die Papierführung bzw. der Transportweg erfolgt dabei derart, dass die Mediumbahn 44, d.h. das Bonpapier, zwischen dem Thermodruckkopf 27 und der Antriebsrolle 29 hindurchläuft, um das Bonpapier zu bedrucken. Danach werden die Bons mittels der Abrisskante 39 vereinzelt, wie dies auch bei einer in den ersten Aufnahmeraum 15 eingesetzten Bonrolle der Fall ist. Im Vergleich zu einer in den ersten Aufnahmeraum 15 eingesetzten Bonrolle kann die in den zweiten Aufnahmeraum 19 eingesetzte Bonrolle 43 eine abweichende, insbesondere geringere Breite aufweisen.

Die frontseitige Abdeckung 21 umfasst gemäß Fig. 1 einen äußeren Rahmen 45, der auch die Antriebsrolle 29 umfasst, sowie eine Innenklappe 47, die innerhalb des äußeren Rahmens 45 relativ zu diesem zwischen einer Offen-Stellung und einer Geschlossen-Stellung schwenkbar gelagert ist. Über die Innenklappe 47 kann ebenfalls auf den zweiten Aufnahmeraum 19 zugegriffen werden. Um die Bonrolle 43 in den zweiten Aufnahmeraum 19 einzusetzen, wird die gesamte frontseitige Abdeckung 21 aufgeklappt. Um alternativ die Trägerbandrolle 37 in den zweiten Aufnahmeraum 19 einzusetzen, wird nur die Innenklappe 47 der frontseitigen Abdeckung 21 aufgeklappt.

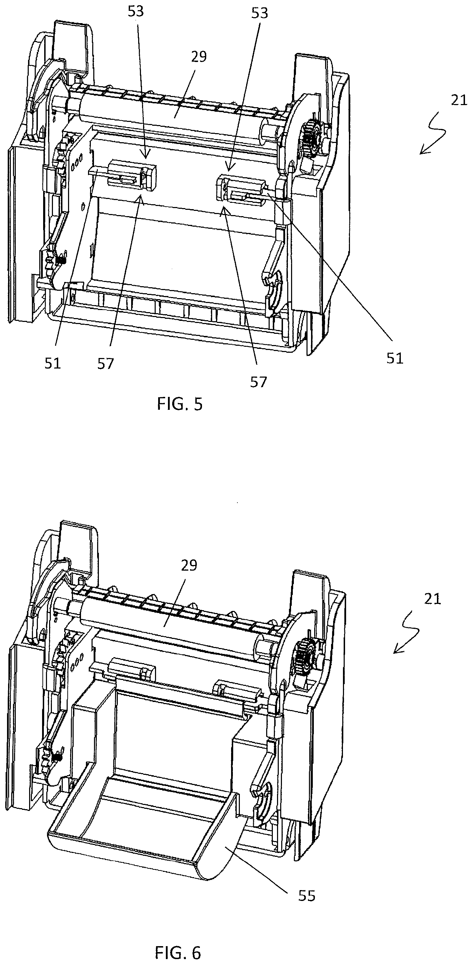

Um die Innenklappe 47 aus ihrer Geschlossen-Stellung in ihre in Fig. 1 gezeigte Offen-Stellung klappen zu können, muss zunächst eine Verriegelung der Innenklappe 47 gelöst werden. Dies erfolgt durch "Zusammendrücken" von zwei an der Außenseite der Innenklappe 47 vorgesehenen Fingergreifabschnitte 49 mit Daumen und Zeigefinger. Die Fingergreifabschnitte 49 sind fest mit zwei an der Innenseite der Innenklappe 47 vorgesehenen, waagrecht verlaufenden stabförmigen Schieberabschnitten 51 verbunden (Fig. 5). Die beiden Schieberabschnitte 51 sind in lateraler Richtung voneinander beabstandet und mittels zweier Druckfedern 53 jeweils in ihre die Innenklappe 47 verriegelnde Stellung vorgespannt. Hierzu ragen die beiden Schieberabschnitte 51 in entgegengesetzten Richtungen jeweils lateral nach außen und greifen mit ihren dortigen Enden in entsprechende Ausnehmungen in den lateralen Seiten des äußeren Rahmens 45 ein. Durch Betätigung der Fingergreifabschnitte 49 kann der Eingriff der beiden Schieberabschnitte 51 in den äußeren Rahmen 45 gegen die Federkraft der beiden Druckfedern 53 gelöst und damit die Innenklappe 47 nach unten hin aufgeklappt werden.

Um zu vermeiden, dass ein Bediener des Druckers 11 bzw. der Ladenwaage versehentlich versucht, eine Trägerbandrolle in den zweiten Aufnahmeraum 19 einzusetzen, obwohl dieser bereits mit einer Bonrolle besetzt ist, ist ein Blockademechanismus vorgesehen, der verhindert, dass in einem derartigen Fall die Innenklappe 47 geöffnet werden kann. Hierzu macht der Drucker 11 von einer Aufnahmeschale 55 Gebrauch, die in den zweiten Aufnahmeraum 19 eingesetzt wird, wenn der Drucker 11 mit einer Bonrolle in dem zweiten Aufnahmeraum 19 betrieben werden soll (Fig. 6).

Die Aufnahmeschale 55 für die Bonrolle 43 weist an ihrer dem frontseitigen Ende des Druckers 11 zugewandten Seite zwei in Fig. 6 nicht erkennbare, senkrecht verlaufende Stege auf, die im eingesetzten Zustand in zwei an der Innenseite der Innenklappe 47 ausgebildete Schlitze 57 eingreifen, die die Bewegungsbahnen der Schieberabschnitte 51 kreuzen und somit jeweils als Anschlag für die nach innen gerichteten Enden der Schieberabschnitte 51 wirken, so dass eine Bewegung der beiden Schieberabschnitte 51 in ihre entriegelnde Stellung, d.h. ein Zusammendrücken der beiden Fingergreifabschnitte 49, nicht möglich ist.

Der Druckkopf 27 ist an der oberseitigen Abdeckung 17 vorgesehen, so dass - um die jeweilige Mediumbahn des in den ersten Aufnahmeraum 15 eingesetzten Mediums zwischen dem Druckkopf 27 und der Antriebsrolle 29 hindurchzuführen - lediglich die oberseitige Abdeckung 17 aufgeklappt, der Rollenanfang des jeweiligen Mediums über die Antriebsrolle 29 gelegt und die oberseitige Abdeckung 17 wieder geschlossen werden muss. Ein umständliches "Einfädeln" entfällt. Da die Antriebsrolle 29 mit der frontseitigen Abdeckung 21 aufgeklappt wird, gilt dies auch für eine in den zweiten Aufnahmeraum 19 eingesetzte Bonrolle 43, die beim Zurückklappen der frontseitigen Abdeckung 21 aus ihrer Offen-Stellung in die Geschlossen-Stellung einen entsprechend weit abgewickelten Rollenanfang der Bonrolle 43 automatisch zwischen dem Druckkopf 27 und der Antriebsrolle 29 verklemmt.

Wie sich aus den vorstehenden Ausführungen ergibt, ermöglicht der erfindungsgemäße Drucker einen flexiblen Betrieb mit verschiedenen Druckmedien, insbesondere Linerless-Etiketten, Trägerband-Etiketten und Bonrollen, und ist dabei komfortabel und fehlersicher zu bedienen.

### Bezugszeichenliste

- 11: Drucker
- 13: Chassis
- 15: erster Aufnahmeraum
- 17: oberseitige Abdeckung
- 19: zweiter Aufnahmeraum
- 21: frontseitige Abdeckung
- 23: Trägerband-Etikettenrolle
- 24: Rollenhalter
- 25: Mediumbahn
- 27: Thermodruckkopf
- 29: Antriebsrolle
- 31: Abziehkante
- 33: Etikett
- 35: Trägerband
- 37: Trägerbandrolle
- 39: Abrisskante
- 41: Klappauflage
- 43: Bonrolle
- 44: Mediumbahn
- 45: äußerer Rahmen
- 47: Innenklappe
- 49: Fingergreifabschnitt
- 51: Schieberabschnitt
- 53: Druckfeder
- 55: Aufnahmeschale
- 57: Schlitz

## Patentansprüche

1. Drucker (11) zum Bedrucken von Druckmedien in Form von Etiketten- und/oder Bonrollen (23, 43), mit einem Druckkopf (27), einer zwischen einer Geschlossen-Stellung und einer Offen-Stellung klappbaren oberseitigen Abdeckung (17), die in der Offen-Stellung einen Zugriff auf einen Aufnahmeraum (15) für eine Etiketten- oder Bonrolle (23) freigibt, einer von einem Antrieb des Druckers (11) antreibbaren Antriebsrolle (29) zum Transport des jeweiligen Druckmediums (23, 43) und einer zwischen einer Geschlossen-Stellung und einer Offen-Stellung klappbaren frontseitigen Abdeckung (21), die in der Offen-Stellung einen Zugriff auf einen weiteren Aufnahmeraum (19) für eine Bonrolle (43) freigibt, wobei die Antriebsrolle (29) an der frontseitigen Abdeckung (21) vorgesehen ist,
**dadurch gekennzeichnet,**
**dass** die Antriebsrolle (29) als Druckwalze für den Druckkopf (27) ausgebildet ist.

2. Drucker nach Anspruch 1,
**dadurch gekennzeichnet,**
**dass** die frontseitige Abdeckung (21) einen äußeren Rahmen (45) mit der Antriebsrolle (29) und eine relativ zu dem äußeren Rahmen (45) zwischen einer Geschlossen-Stellung und einer Offen-Stellung klappbare Innenklappe (47) umfasst, die in der Offen-Stellung den Zugriff auf den weiteren Aufnahmeraum (19) für eine Trägerbandrolle (37) freigibt.

3. Drucker nach Anspruch 2,
**dadurch gekennzeichnet,**
**dass** eine Medienaufnahme (55) für eine Bonrolle (43) vorgesehen ist, die bei geöffneter frontseitiger Abdeckung (21) in den weiteren Aufnahmeraum (19) einsetzbar ist.

4. Drucker nach Anspruch 3,
**dadurch gekennzeichnet,**
**dass** die Medienaufnahme (55) eine Aufnahmeschale ist.

5. Drucker nach Anspruch 3 oder 4,
**dadurch gekennzeichnet,**
**dass** Blockiermittel vorgesehen sind, die das Öffnen der Innenklappe (47) bei eingesetzter Medienaufnahme (55) blockieren.

6. Drucker nach Anspruch 5,
**dadurch gekennzeichnet,**
**dass** eine Verriegelung (51) vorgesehen ist, die in eine das Öffnen der Innenklappe (47) verriegelnde Stellung vorgespannt ist und die mittels Betätigungsmitteln (49) in eine das Öffnen der Innenklappe (47) erlaubende, entriegelnde Stellung überführbar ist, wobei bei eingesetzter Medienaufnahme (55) die Betätigung der Verriegelung (51) blockiert ist.

7. Drucker nach Anspruch 6,
**dadurch gekennzeichnet,**
**dass** die Verriegelung (51) zwei jeweils in lateraler Richtung bewegliche, lateral voneinander beabstandete sowie einander entgegengesetzt und jeweils nach lateral vorgespannte Schieber (51) aufweist, die in der verriegelnden Stellung mit äußeren Enden in laterale Seiten des äußeren Rahmens (45) eingreifen, wobei die Medienaufnahme (55) für jeden der beiden Schieber (51) einen Blockadeabschnitt aufweist, wobei die Blockadeabschnitte bei in den weiteren Aufnahmeraum (19) eingesetzter Medienaufnahme (55) in eine jeweilige Bewegungsbahn des jeweiligen Schiebers (51) eingreifen und jeweils als die Überführung des jeweiligen Schiebers (51) in die entriegelnde Stellung blockierender Anschlag für ein inneres Ende des jeweiligen Schiebers (51) wirken.

8. Drucker nach zumindest einem der Ansprüche 2 bis 7,
**dadurch gekennzeichnet,**
**dass** die in den weiteren Aufnahmeraum (19) eingesetzte Trägerbandrolle (37) in antriebswirksamer Verbindung mit dem Antrieb des Druckers (11) zum Antreiben der Antriebsrolle (29) steht.

9. Drucker nach Anspruch 8,
**dadurch gekennzeichnet,**
**dass** der Trägerbandrolle (37) eine Rutschkupplung vorgeschaltet ist.

10. Drucker nach zumindest einem der vorstehenden Ansprüche,
**dadurch gekennzeichnet,**
**dass** ein Rollenhalter (24) für Trägerband-Etikettenrollen (23) und Linerless-Etikettenrollen vorgesehen ist, der bei geöffneter oberseitiger Abdeckung (17) in den Aufnahmeraum (15) einsetzbar ist.

11. Drucker nach zumindest einem der vorstehenden Ansprüche, **dadurch gekennzeichnet,**
**dass** in dem Aufnahmeraum (15) eine in eine Aufnahmeposition klappbare Klappauflage (41) für eine Bonrolle (43) vorgesehen ist.

12. Drucker nach zumindest einem der vorstehenden Ansprüche, **dadurch gekennzeichnet,**
**dass** der Druckkopf (27) an der oberseitigen Abdeckung (17) vorgesehen ist.

13. Drucker nach zumindest einem der vorstehenden Ansprüche, **dadurch gekennzeichnet,**
**dass** der Drucker (11) wenigstens drei voneinander verschiedene Papierführungen für Druckmedien zur Verfügung stellt.

14. Drucker nach Anspruch 13,
**dadurch gekennzeichnet,**
**dass** der Drucker (11) vier voneinander verschiedene Papierführungen für Druckmedien zur Verfügung stellt.

15. Ladenwaage mit einem Drucker (11) nach zumindest einem der vorstehenden Ansprüche.

## Claims

1. A printer (11) for printing printed media in the form of label and/or receipt rolls (23, 43), having a printhead (27); an upper-side cover (17) which is pivotable between a closed position and an open position and which releases access to a reception space (15) for a label or receipt roll (23) in the open position; a drive roller (29) which can be driven by a drive of the printer (11) for the transport of the respective printed medium (23, 43); and a front-side cover (21) which can be pivoted between a closed position and an open position and which releases access to a further reception space (19) for a receipt roll (43) in the open position, with the drive roller (29) being provided at the front-side cover (21),
**characterized in that**
the drive roller (29) is configured as a print roll for the printhead (27).

2. A printer in accordance with claim 1,
**characterized in that**
the front-side cover (21) comprises an outer frame (45) having the drive roller (29) and an inner flap (47) which is pivotable relative to the outer frame (45) between a closed position and an open position and which releases access to the further reception space (19) for a carrier tape roll (37) in the open position.

3. A printer in accordance with claim 2,
**characterized in that**
a media receiver (55) is provided for a receipt roll (43) which can be inserted into the further reception space (19) with an open front-side cover (21).

4. A printer in accordance with claim 3,
**characterized in that**
the media receiver (55) is a reception shell.

5. A printer in accordance with claim 3 or claim 4,
**characterized in that**
blocking means are provided which block the opening of the inner flap (47) with an inserted media receiver (55).

6. A printer in accordance with claim 5,
**characterized in that**
a latch (51) is provided which is preloaded into a position latching the opening of the inner flap (47) and which can be moved by means of actuation means (49) into an unlatching position allowing the opening of the inner flap (47), with the actuation of the latch (51) being blocked with an inserted media receiver (55).

7. A printer in accordance with claim 6,
**characterized in that**
the latch (51) has two pushers (51) which are each movable in a lateral direction, which are laterally spaced apart from one another, which are preloaded oppositely and respectively laterally and which engage in the latching position with outer ends in lateral sides of the outer frame (45), with the media receiver (55) having a blockage section for each of the two pushers (51), with the blockage sections engaging into a respective trajectory of the respective pusher (51) with a media receiver (55) inserted into the further reception space (19) and respectively acting as an abutment for an inner end of the respective pusher (51) blocking the movement of the respective pusher (51) into the unlatching position.

8. A printer in accordance with at least one of the claims 2 to 7, **characterized in that**
the carrier tape roll (37) inserted into the further reception space (19) is in drive-effective connection with the drive of the printer (11) for driving the driver roller (29).

9. A printer in accordance with claim 8,
**characterized in that**
a slip clutch is connected upstream of the carrier tape roll (37).

10. A printer in accordance with at least one of the preceding claims,
**characterized in that**
a roll holder (24) for carrier tape label rolls (23) and linerless label rolls is provided which can be inserted into the reception space (15) with an open upper-side cover (17).

11. A printer in accordance with at least one of the preceding claims,
**characterized in that**
a pivot support (41) which can be pivoted into a reception position is provided in the reception space (15) for a receipt roll (43).

12. A printer in accordance with at least one of the preceding claims,
**characterized in that**
the printhead (27) is provided at the upper-side cover (17).

13. A printer in accordance with at least one of the preceding claims,
**characterized in that**
the printer (11) provides at least three mutually different paper guides for printed media.

14. A printer in accordance with claim 13,
**characterized in that**
the printer (11) provides four mutually different paper guides for printed media.

15. Store scales having a printer (11) in accordance with at least one of the previous claims.

## Revendications

1. Imprimante (11) pour l'impression de supports d'impression sous la forme de bobines d'étiquettes et/ou de bobines de tickets de caisse (23, 43), comprenant une tête d'impression (27), un couvercle supérieur (17) susceptible de basculer entre une position fermée et une position ouverte, qui permet dans la position ouverte un accès à une chambre de réception (15) pour une bobine d'étiquettes ou de tickets de caisse (23), un rouleau d'entraînement (29) susceptible d'être entraîné par un entraînement de l'imprimante (11) pour le transport du support d'impression respectif (23, 43), et un couvercle frontal (21) susceptible de basculer entre une position fermée et une position ouverte, qui permet dans la position ouverte un accès à une autre chambre de réception (19) pour une bobine de tickets de caisse (43), le rouleau d'entraînement (27) étant prévu sur le couvercle frontal (21), **caractérisée en ce que**
le rouleau d'entraînement (29) est réalisé sous forme de rouleau presseur pour la tête d'impression (27).

2. Imprimante selon la revendication 1,
**caractérisée en ce que** le couvercle frontal (21) inclut un cadre extérieur (45) avec le rouleau d'entraînement (29) et un volet intérieur (47) susceptible de basculer par rapport au cadre extérieur (45) entre une position fermée et une position ouverte, qui permet dans la position ouverte l'accès à l'autre chambre de réception (19) pour un rouleau (37) destiné à une bande de support.

3. Imprimante selon la revendication 2,
**caractérisée en ce qu'**il est prévu un récepteur de support (55) pour une bobine de tickets de caisse (43), qui peut être mis en place dans l'autre chambre de réception (19) lorsque le couvercle frontal (21) est ouvert.

4. Imprimante selon la revendication 3, **caractérisé en ce que** le récepteur de support (55) est une coque de réception.

5. Imprimante selon la revendication 3 ou 4,
**caractérisée en ce qu'**il est prévu des moyens de blocage qui bloquent l'ouverture du volet intérieur (47) lorsque le récepteur de support (55) est mis en place.

6. Imprimante selon la revendication 5,
**caractérisée en ce qu'**il est prévu un verrouillage (51), qui est précontraint vers une position qui verrouille l'ouverture du volet intérieur (47), et qui est susceptible d'être transféré au moyen d'organes d'actionnement (49) vers une position de déverrouillage qui permet l'ouverture du volet intérieur (47), dans lequel l'actionnement du verrouillage (51) est bloqué lorsque que le récepteur de support (55) est mis en place.

7. Imprimante selon la revendication 6,
**caractérisée en ce que** le verrouillage (51) comprend de coulisseaux (51) respectivement déplaçables en direction latérale, écartés latéralement l'un de l'autre et précontraints chacun en direction latérale en sens opposés l'un à l'autre, qui s'engagent dans la position de verrouillage avec des extrémités extérieures dans des côtés latéraux du cadre extérieur (45), dans laquelle le récepteur de support (55) comprend un tronçon de blocage pour chacun des de coulisseaux (51), lesdits tronçons de blocage s'engageant, lorsque le récepteur de support (55) est mis en place dans l'autre chambre de réception (19), dans une voie de déplacement respectif du coulisseau respectif (51), et faisant respectivement office de butée, bloquant le transfert du coulisseau respectif (51) dans la position de déverrouillage, pour une extrémité intérieure du coulisseau respectif (51).

8. Imprimante selon l'une au moins des revendications 2 à 7, **caractérisée en ce que** le rouleau de bande de support (37) mis en place dans l'autre chambre de réception (19) est en liaison active en termes d'entraînement avec l'entraînement de l'imprimante (11) pour l'entraînement du rouleau d'entraînement (29).

9. Imprimante selon la revendication 8,
**caractérisée en ce qu'**un accouplement glissant est disposé avant le rouleau de bande de support (37).

10. Imprimante selon l'une au moins des revendications précédentes, **caractérisée en ce qu'**il est prévu un porte-bobine (24) pour des bobines d'étiquettes sur bande de support (23) et pour des bobines d'étiquettes sans support, qui peut être mis en place dans la chambre de réception (15) quand le couvercle supérieur (17) est ouvert.

11. Imprimante selon l'une au moins des revendications précédentes, **caractérisée en ce qu'**un support basculant (41) pour une bobine de tickets de caisse (43), capable de basculer vers une position de réception, est prévu dans la chambre de réception (15).

12. Imprimante selon l'une au moins des revendications précédentes, **caractérisée en ce que** la tête d'impression (27) est prévue sur le couvercle supérieur (17).

13. Imprimante selon l'une au moins des revendications précédentes, **caractérisée en ce que** l'imprimante (11) met à disposition au moins trois guidages de papier différents les uns des autres pour des supports d'impression.

14. Imprimante selon la revendication 13,
**caractérisée en ce que** l'imprimante (11) met à disposition quatre guidages de papier différents les uns des autres pour des supports d'impression.

15. Balance commerciale comprenant une imprimante (11) selon l'une au moins des revendications précédentes.
